# EUROPÄISCHE PATENTSCHRIFT

(11) **EP 0 349 730 B1**
(45) Veröffentlichungstag und Bekanntmachung des Hinweises auf die Patenterteilung: **12.10.1994**
(21) Anmeldenummer: 89108407.1
(22) Anmeldetag: 10.05.1989
(51) Int. Cl.: G01P 15/08, G01C 9/06, B60R 21/32, B60R 21/00

(54) **Beschleunigungs-Sensor für Fahrzeuge**
Acceleration sensor for vehicles
Détecteur d'accélération pour véhicules

(30) Priorität: 10.05.1988 DE 3815938
(43) Veröffentlichungstag der Anmeldung: 10.01.1990
(73) Patentinhaber: Bayerische Motoren Werke Aktiengesellschaft, 80788 München (DE)
(72) Erfinder: Weishaupt, Walter, D-8000 München 60 (DE); Jost, Michael, D-8044 Unterschliessheim (DE)

(56) Entgegenhaltungen:
- DE-A- 3 545 874
- DE-A- 3 603 346
- DE-A- 3 634 244
- GB-A- 2 047 516
- GB-A- 2 059 055
- US-A- 3 164 023
- US-A- 3 853 331
- US-A- 4 154 000
- US-A- 4 166 641

## Beschreibung

Die Erfindung bezieht sich auf ein Verfahren zur Detektion des Überschreitens eines vorgegebenen Beschleunigungswertes nach dem Oberbegriff des Patentanspruchs 1 sowie auf ein Fahrzeug mit einem Sensor zur Durchführung dieses Verfahrens. Ein derartiges Verfahren ist aus der GB-A-2 059 055 bekannt. Diese Druckschrift offenbart einen Bewegungssensor, bei dem mit mehreren optischen Sensoren die Position einer in einer Flüssigkeit befindlichen Blase detektiert wird. Obwohl die Möglichkeit des Einsatzes in einem Beschleunigungssensor angesprochen wird, geht die Druckschrift nicht auf die Detektion bestimmter, vorgegebener Grenzwerte ein. Weitere Sensoren sind aus der DE-OS 36 09 841 und der GB-A 2022822 bekannt. Innerhalb eines z.B. pyramiden- oder kegelförmigen Gehäuses ist ein Gas als Anzeigemedium angeordnet, das im Ruhezustand über der Flüssigkeit sitzt. Beschleunigungen werden mit Hilfe einer Sender-Empfänger-Strecke bestimmt, die über den Flüssigkeitsspiegel führt und bei der der Sender am geodätisch höchsten Punkt des Gehäuses angeordnet ist. Die Empfänger sitzen seitlich am Gehäuse und empfangen die an der Oberfläche der Flüssigkeit reflektierte bzw. durch diese gebrochene Strahlung.

Ein derartiger Sensor ist in mehrfacher Hinsicht problematisch. Aufgrund der relativ großen Masse der bewegten Flüssigkeit und der vielfältigen Wechselwirkungen zwischen dieser und dem Gehäuse ist der Spiegel in der Regel ständigen, völlig uneinheitlichen und nicht vorhersehbaren Bewegungen unterworfen. Die Folge davon ist, daß durch die Überlagerung der vielfältigen, in der Regel relativ ungedämpften Bewegungen die Empfänger häufig kurzzeitig bereits mit Sendeleistung bestrahlt werden, obwohl die zu detektierende Beschleunigung weit unterhalb eines kritischen Grenzwertes liegt. Damit dürfte ein derartiger Sensor nur beschränkt einsatzfähig sein. Dies gilt z.B. für das Auslösen von Insassenschutzvorrichtungen wie z.B. Airbag oder Überrollbügel, die nur bei tatsächlichem Vorliegen eines kritischen Beschleunigungswertes irreversibel ausgelöst werden dürfen.

Der bekannte Sensor erfordert für eine hinreichende Wirksamkeit zusätzliche elektronische Mittel, die die genannten Störeinflüsse eliminieren. Dies ist in der Regel jedoch nur mit Hilfe von Filtern und Integrationsgliedern möglich. Beides erfordert einen gewissen zeitlichen Aufwand mit der Folge, daß ein derartiger Sensor hinsichtlich seiner zeitlichen Ansprechbarkeit nicht unkritisch ist.

Der Erfindung liegt die Aufgabe zugrunde, ein Verfahren sowie eine Vorrichtung der eingangs genannten Art zu schaffen, durch welche eine konstruktiv einfache Bauweise erreicht und ein sicheres und schnelles Erkennen eines zu detektierenden Beschleunigungswertes ermöglicht wird.

Die Erfindung löst diese Aufgabe durch die Merkmale des Patentanspruchs 1.

Wesentlich für die vorliegende Erfindung ist, daß sich das Anzeigemedium innerhalb der Flüssigkeit beschleunigungsabhängig bewegt. Schwingungen, soweit sie überhaupt auftreten können, in der Flüssigkeit haben keinen Einfluß auf die Bewegung und die Stellung des Anzeigemediums, da die Flüssigkeit diese Schwingungen in sich selbst kompensiert. Die Stellung des Anzeigemediums liefert somit eine präzise Anzeige der zu detektierenden Beschleunigung. Dies gilt insbesondere dann, wenn der Dichteunterschied zwischen Flüssigkeit und Anzeigemedium hinreichend groß ist. Die Einstellung des Anzeigemediums wird bestimmt durch die resultierende Beschleunigung der Flüssigkeit. Diese Beschleunigung setzt sich zusammen aus der Gravitation und der ggf. vorhandenen dynamischen Beschleunigungskomponente der Flüssigkeit in der durch die Ausrichtung der Libelle festgelegten Richtung und liefert den Auftrieb für das Anzeigemedium.

Eine konstruktiv besonders vorteilhafte Ausbildung des Sensors besteht in einer Sender-/Empfänger-Strecke für elektromagnetische oder akustische Wellen, die so ausgerichtet ist, daß sich das Anzeigemedium beim zu detektierenden Beschleunigungswert darin befindet. Damit kommt es in diesem Fall zu einer Änderung der Bedämpfung der Sender-/Empfänger-Strecke. In der Regel vergrößert sich dann die Bedämpfung. Dies ist durch den zweimaligen Durchlauf der Strahlung durch die Grenzschicht zwischen Flüssigkeit und Anzeigemedium bedingt.

Aufgrund des konstruktiv einfachen Aufbaus ist es auch möglich, mehrere verschieden gerichtete Beschleunigungskomponenten mit Hilfe entsprechend mehrerer derartiger Sensoren zu bestimmen. Dabei dient jeder der Sensoren dazu, die relevante Beschleunigung in der zugehörigen Richtung zu bestimmen. Bei entsprechender Ausrichtung ist es dabei auch möglich, die Zahl der Sensoren geringer als die Zahl der zu bestimmenden Beschleunigungskomponenten zu wählen.

Erfindungsgemäß ist das Gehäuse für den Sensor als gerade Röhren-Libelle ausgebildet, die gegen die zu bestimmende Beschleunigung geneigt ist. Geht es beispielsweise darum, eine Beschleunigung in Längsrichtung des Fahrzeugs zu bestimmen, so ist die Röhre gegen die Längsrichtung geneigt. Das Anzeigemedium sitzt in Ruhelage bzw. bei beschleunigungsfreier Bewegung des Fahrzeugs an der geodätisch höchsten Stelle der Röhre und ist bei zusätzlicher Beschleunigung, bestimmt aus der vektoriellen Addition von Gravitation und dynamischer Beschleunigung der Flüssigkeit, die den Auftrieb für das Anzeigemedium liefert.

Mit Hilfe eines derart aufgebauten Sensor ist es auch möglich, mehrere senkrecht zueinanderverlaufende Beschleunigungskomponenten zu bestimmen. Hierzu sind die Röhren auf einen gemeinsamen Scheitel hin ausgerichtet. Die Sender-/Empfänger-Strecken der einzelnen Sensoren verlaufen auf einen gemeinsamen Endpunkt hin, der für die einzelnen Röhren auch der Projektionspunkt des Scheitels bezüglich der Ebene ist, in der die Beschleunigungskomponenten liegen.

Weitere Mittel, die Funktion des Beschleunigungssensors zu verbessern, sind Gegenstand der Patentansprüche 7 bis 11. Eine vorteilhafte konstruktive Ausgestaltung findet sich in Patentanspruch 12. Die Mittel dienen dazu, eine Insassenschutzvorrichtung auch dann auszulösen, wenn sich das Fahrzeug in einem der Schwerelosigkeit zumindest nahekommenden und damit besonders kritischen Zustand befindet.

Bei Schwerelosigkeit sind die Beschleunigungswerte im Kraftfahrzeug relativ gering. Dennoch ist es bereits z.B. während des freien Falls erforderlich, die Insassenschutzvorrichtung auszulösen, da bei Beendigung des schwerelosen Zustandes häufig extrem hohe Beschleunigungswerte auftreten (Aufprall). Durch die Weiterbildung der Erfindung wird erreicht, daß während des schwerelosen Zustandes bereits die Insassenschutzvorrichtung zur Wirkung kommt, um somit am Ende der Schwerelosigkeit einen hinreichenden Schutz der Fahrzeuginsassen zu liefern.

Da beim normalen Fahrbetrieb gelegentlich ein der Schwerelosigkeit nahekommender Zustand des Kraftfahrzeugs erreicht wird, dient die im Patentanspruch 8 angegebene Weiterbildung der Erfindung dazu, zwischen derartigen "normalen" und "kritischen" Situationen zu unterscheiden. Um bei derartigen Situationen, die beispielsweise beim Fahren über eine Kuppe auftreten, ein nicht notwendiges Auslösen der Insassenschutzvorrichtung zu vermeiden, wird mit Hilfe eines Zeitglieds die Dauer des kritischen Zustands bestimmt. Ist diese Dauer klein, d.h. handelt es sich nur um ein zeitlich gesehen sehr kurzen kritischen Zustand, so soll die Insassenschutzvorrichtung nicht ausgelöst werden.

Die verschiedenen bevorzugten Möglichkeiten, den Bewegungszustands-Sensor zu konkretisieren, sind in den Patentansprüchen 9 bis 11 im einzelnen angegeben.

Ein Abstandsmesser stellt beim Zustand der Schwerelosigkeit einen Abstand von einem Untergrund fest, der deutlich über dem normalen Wert liegt. Der Sensor für die vertikale Beschleunigung liefert beim schwerelosen Zustand einen Wert nahe Null. Schließlich ist auch die Ausfederung eines oder mehrerer der Fahrzeugräder, wenn sie gleich dem maximal möglichen Wert ist, ein gutes Indiz für den Zustand der Schwerelosigkeit.

Zwar ist aus der DE-PS 35 45 874 eine Sicherheitsvorrichtung für einen Überrollbügel eines Kraftfahrzeugs bekannt, die mit Hilfe eines Radausfederungssensors gesteuert ist. Dabei wird jedoch im Gegensatz zur Erfindung der Zustand des freien Falls nicht berücksichtigt, da das Signal des Radausfederungssensors nur dann zur Wirkung kommt, wenn gleichzeitig ein beim Überschreiten einer bestimmten Neigung betätigter Neigungsschalter anspricht. Ein funktioneller Zusammenhang mit der Neigung des Kraftfahrzeugs ist jedoch beim schwerelosen Zustand häufig nicht gegeben.

In der Zeichnung sind Ausführungsbeispiele der Erfindung dargestellt.

Es zeigt
- Fig.1: eine Alternative zum Sensor von Fig. 1 für zwei entgegengesetzt gleiche Beschleunigungswerte,
- Fig.2: eine weitere Sensoreinrichtung schematisch zur Bestimmung eines Überschlags und einer extremen Beschleunigung in Längsrichtung des Fahrzeugs und
- Fig.3: eine weitere Ausführungsform, bei der auch der auch der Zustand der Schwerelosigkeit berücksichtigt wird.

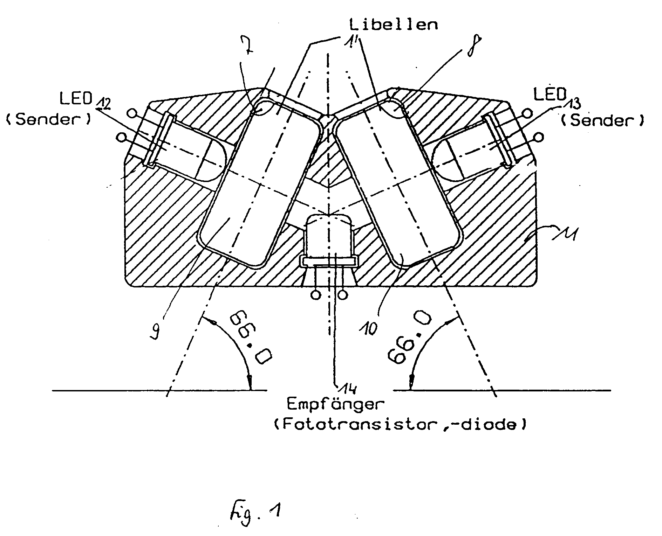

Beim Ausführungsbeispiel von Fig. 1 sind zwei gerade Röhren-Libellen 1′ unter einem Winkel (hier: 66°) eingestellt, bei dem im statischen Fall das Kraftfahrzeug umkippt. Innerhalb der Libellen 1′ sind jeweils Luftblasen 7 und 8 vorgesehen, die gegenüber der Flüssigkeit 9 bzw. 10 innerhalb der Libellen 1′ einen Auftrieb erfahren.

Die Libellen 1′ befinden sich in einem Gehäuse 11, in dem ferner zwei lichtemittierende Dioden als Sender 12 und 13 mit einem gemeinsamen Empfänger 14 angeordnet sind. Bei einer aus dynamischer und/oder statischer Beschleunigung resultierenden Beschleunigung der Libellen 1′, die einen kritischen Wert erreicht, kommt es zu einer Unterbrechung der zwischen den Sendern 12 bzw. 13 und den Empfängern 14 bestehenden Sende-/Empfänger-Strecken. Dadurch erhält der Empfänger 14 ein entsprechend in der Intensität verändertes Signal. Dieses kann als Auslösesignal für eine Sicherheitseinrichtung, wie beispielsweise einen ausfahrbaren Überrollbügel, verwendet werden. Durch verschachteltes Takten der Sender 12 bzw. 13 kann zusätzlich die Seite detektiert werden, nach dem ein Umkippen bzw. Überschlag des Fahrzeugs bevorsteht.

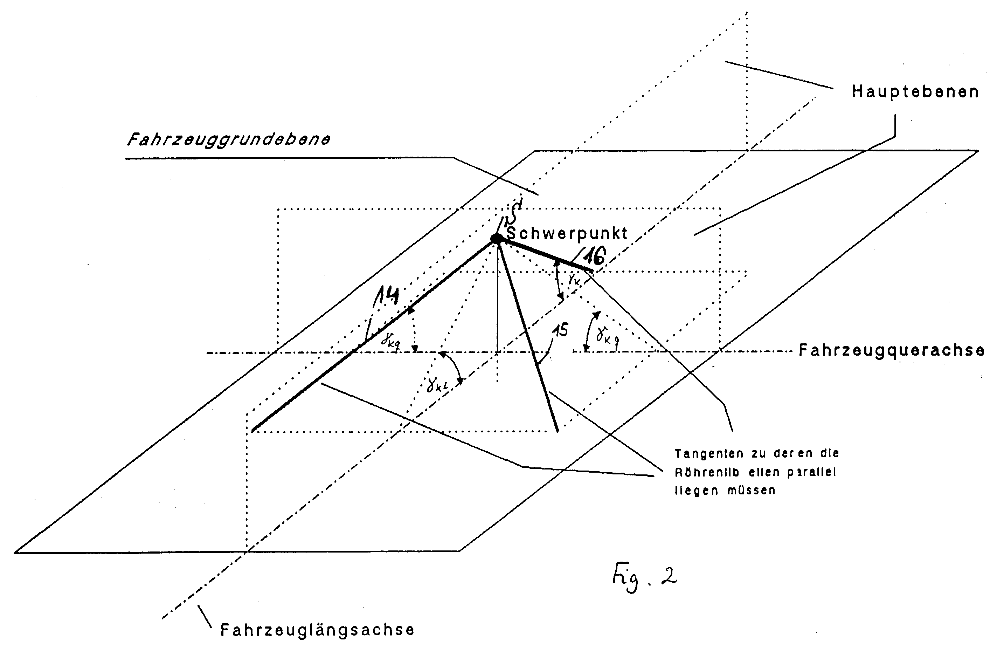

Durch ein bezüglich der Längsrichtung des Fahrzeugs um 90° verdrehtes Einbauen der Libellen 1′ kann die in Fig. 2 dargestellte Sensoreinrichtung auch dazu verwendet werden, Beschleunigungen in Längsrichtung des Fahrzeugs zu detektieren und beispielsweise einen Airbag auslösen.

Beim Ausführungsbeispiel von Fig. 2 sind drei Libellen (nicht dargestellt) entsprechend den Libellen 1′ von Fig. 1 gegeneinander geneigt und mit gemeinsamen Scheitel S in Richtung der eingezeichneten Geraden 14, 15 und 16 vorgesehen. Die Neigung der drei Libellen ist derart, daß die projizierten Neigungswinkel der Libellen auf den Hauptebenen, welche senkrecht zur Längs- und Querachse stehen, gleich den kritischen Winkeln für einen Überschlag in Längs- und Querrichtung sind. Damit wird es möglich, anstelle von zunächst erforderlich erscheinenden vier Libellen mit lediglich drei Libellen auszukommen. Zudem kann bei getaktetem Sendebetrieb entsprechender Sender, die wie in Fig. 2 seitlich von den Libellen angeordnet sein können und auf einen gemeinsamen, am Fußende des Lotes vom Scheitel S auf die Grundebene angeordneten Empfänger arbeiten, auch die Richtung detektiert werden, in der der der Überschlag erfolgt. Entsprechend kann eine geeignete Sicherheitseinrichtung, wie beschrieben, in Stellung bzw. zur Wirkung gebracht werden.

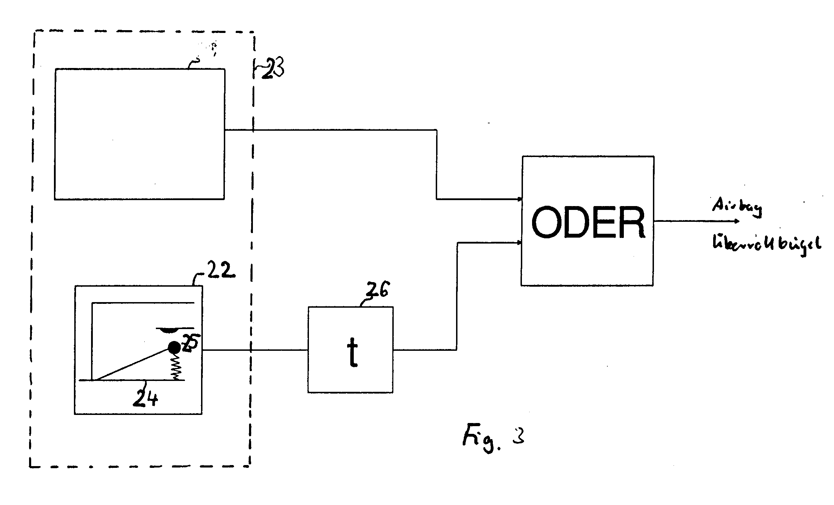

Fig. 3 zeigt eine Steuervorrichtung für die Insassenschutzvorrichtung, die durch den Sensor 1 und unabhängig davon von einem Bewegungszustands-Sensor 22 auslösbar ist. Dies ist durch ein ODER-Funktionsglied symbolisiert.

Der Bewegungszustands-Sensor 22 kann beispielsweise auf die vertikale Beschleunigung des Kraftfahrzeugs ansprechen und zusammen mit der Sensoreinrichtung 1 als kompakte Baueinheit 23 ausgebildet sein. Im einfachsten Fall handelt es sich beim Sensor 22 um eine Waage 24, mit der das Gewicht eines Massekörpers 25 bestimmt wird.

Bei normalen Fahrzuständen zeigt die Waage 24 einen Wert an, der um den Wert des tatsächlichen Gewichts schwankt. Die Schwankungen sind durch vorübergehende relativ geringe vertikale Beschleunigungen bedingt, die das Kraftfahrzeug während des Fahrbetriebs erfährt.

Verliert das Kraftfahrzeug den Kontakt zum Untergrund, so stellt sich ein Bewegungszustand ein, der dem der Schwerelosigkeit zumindest ähnlich ist. Die Waage 24 liefert nun einen Wert, der im "Idealfall", d.h. dem ungestörten freien Fall, gleich Null ist bzw. innerhalb eines kleinen Wertebereich um diesen Wert herum liegt.

Die Steuervorrichtung erkennt so den Zustand der Schwerelosigkeit. Hält dieser eine gewisse Zeit, beispielsweise 100 msec. an, so wird durch die Steuervorrichtung der Airbag bzw. der Überrollbügel ausgelöst und in Funktion gebracht. Die angegebene Zeitdauer wird mit Hilfe eines Zeitglieds 26 bestimmt, über die das Ausgangssignal der Waage 24 geführt ist.

Die Auslösung der Insassenschutzvorrichtung durch den Bewegungszustands-Sensor 22 erfolgt unabhängig von der möglichen Auslösung durch den Beschleunigungs-Sensor 1 und somit auch, wenn dieser keinen kritischen Wert der gemessenen Beschleunigung feststellt. Damit ist sichergestellt, daß unter sämtlichen möglichen Bewegungszuständen des Kraftfahrzeugs die Sicherheitsvorrichtung rechtzeitig ausgelöst wird und somit ihre Funktion sicher erfüllt.

Anstelle des dargestellten waageähnlichen Fahrzustands-Sensor 22 kann auch mit Hilfe eines nicht gezeigten Abstandsmessers, der den Abstand des Kraftfahrzeugs von der Fahrbahnoberfläche bestimmt bzw. eines Radausfederungs-Sensors, der bei maximal ausgefederten Fahrzeugrad anspricht, erkannt werden, daß das Kraftfahrzeug den Kontakt zur Fahrbahn verloren hat bzw. nur noch einen sehr geringen und dem Zustand des freien Falls nahekommenden Kontakt zur Fahrbahn besitzt.

## Patentansprüche

1. Verfahren zur Detektion des Überschreitens eines vorgegebenen Beschleunigungswertes, bei dem der vorgegebene Beschleunigungswert mittels einer in einer abgeschlossenen, geraden und mit ihrer Längsrichtung gegen die zu überwachende Beschleunigung geneigten Röhren-Libelle bewegten Flüssigkeit, mittels eines in der Flüssigkeit angeordneten Anzeigemediums geringerer Dichte und geringeren Volumens und mittels eines Detektors, der als Sender/Empfänger-Strecke für optische, elektromagnetische oder akustische Wellen ausgebildet ist, erkannt wird, dadurch gekennzeichnet, daß dem vorgegebenen Beschleunigungswert ein Winkel der Längsrichtung der Röhren-Libelle zur Richtung der zu überwachenden Beschleunigung und zur Richtung der Gravitation zugeordnet wird.

2. Fahrzeug mit einem Sensor zur Durchführung des Verfahrens nach Anspruch 1, mit einer abgeschlossenen, geraden, in ihrer Längsrichtung gegen die zu überwachende Beschleunigung geneigten Röhren-Libelle, in der eine Flüssigkeit und ein Anzeigemedium geringerer Dichte und geringeren Volumens enthalten ist, und einem Detektor, der als Sender/Empfänger-Strecke für optische, elektromagnetische oder akustische Wellen, die durch die Flüssigkeit in der Röhren-Libelle hindurchdringen, ausgebildet ist und in Abhängigkeit von der Position des Anzeigemediums das Erreichen des vorgegebenen Beschleunigungwertes erkennt, wobei die Längsachse der Röhren-Libelle in einem derartigen Winkel zur Richtung der zu überwachenden Beschleunigung und zur Richtung der Gravitation angeordnet ist, daß das Anzeigemedium bei Erreichen des vorgegebenen Beschleunigungswertes eine Position zwischen der Sender/Empfänger-Strecke einnimmt.

3. Vorrichtung nach Anspruch 2,
dadurch gekennzeichnet, daß mehrere derartige Sensoren zur Bestimmung unterschiedlich gerichteter Beschleunigungen verwendet sind.

4. Vorrichtung nach Anspruch 3,
dadurch gekennzeichnet, daß die Röhren-Libellen (1') der einzelnen Sensoren auf einen gemeinsamen Scheitel (S) hin ausgerichtet sind.

5. Vorrichtung nach Anspruch 4,
dadurch gekennzeichnet, daß die Sender-/Empfänger-Strecken (5, 6) der Sensoren in einem gemeinsamen Empfänger (14) enden.

6. Vorrichtung nach einem der Ansprüche 2 bis 5, dadurch gekennzeichnet, daß ein zusätzlicher Bewegungszustandssensor (22) mit nachgeschalteter Auswerteschaltung (ODER) vorgesehen ist, der unabhängig vom Beschleunigungssensor eine Insassenschutzvorrichtung auslöst, wenn das Kraftfahrzeug sich in einem der Schwerelosigkeit nahekommenden Zustand befindet.

7. Vorrichtung nach Anspruch 6, dadurch gekennzeichnet, daß dem Bewegungszustandssensor (22) ein Zeitglied (6) nachgeschaltet ist, und daß die Insassenschutzvorrichtung durch die Auswerteschaltung (ODER) ausgelöst ist, wenn sich das Fahrzeug länger als die Schaltzeit (t) in dem der Schwerelosigkeit nahekommenden Zustand befindet.

8. Vorrichtung nach Anspruch 6 oder 7, dadurch gekennzeichnet, daß der Bewegungszustandssensor ein den Abstand des Kraftfahrzeugs von der Fahrbahnoberfläche bestimmender Abstandsmesser ist.

9. Vorrichtung nach Anspruch 6 oder 7, dadurch gekennzeichnet, daß der Bewegungszustandssensor (22) auf die vertikale Beschleunigung anspricht.

10. Vorrichtung nach Anspruch 6 oder 7, dadurch gekennzeichnet, daß der Bewegungszustandssensor ein Radausfederungssensor ist.

11. Vorrichtung nach einem der Ansprüche 6 bis 10, gekennzeichnet durch eine kompakte Baueinheit, in der der Beschleunigungssensor und Bewegungszustandssensor angeordnet sind.

## Claims

1. A method for detecting the overstepping or transgression of a pre-defined acceleration value, in which the pre-defined acceleration value is recognised by means of fluid movement in a tubular spirit level which is sealed, straight and inclined with its longitudinal direction against the acceleration to be monitored, by means of a display medium of lower density and lower volume contained in the fluid, and by means of a detector in the form of a transmitter/receiver path for optical, electromagnetic or acoustic waves, characterised in that an angle of the longitudinal direction of the tubular spirit level to the direction of the acceleration to be monitored and to the direction of gravitation is assigned to the pre-defined acceleration value.

2. A vehicle with a sensor for carrying out the method according to claim 1, comprising a tubular spirit level which is sealed, straight and inclined with its longitudinal direction against the acceleration to be monitored, the spirit level containing a fluid and a display medium of lower density and lower volume, and a detector in the form of a transmitter/receiver path for optical, electromagnetic or acoustic waves which penetrate the fluid in the tubular spirit level so as to recognise attainment of a pre-defined acceleration value as a function of the position of the display medium, wherein the longitudinal axis of the tubular spirit level is arranged at such an angle to the direction of the acceleration to be monitored and to the direction of gravitation that the display medium, upon attainment of the predefined acceleration value, assumes a position in the transmitter/receiver path.

3. A device according to claim 2,
characterised in that a plurality of such sensors are used to determine different directional accelerations.

4. A device according to claim 3,
characterised in that the tubular spirit levels (1') of the individual sensors are aligned towards a common vertex (S).

5. A device according to claim 4,
characterised in that the transmitter/receiver paths (5, 6) of the sensors end at a common receiver (14).

6. A device according to any one of claims 2 to 5,
characterised in that an additional movement status sensor (22) with an evaluation circuit (OR) connected in series is provided which triggers an occupant protection device independently of the acceleration sensor if the motor vehicle is in a state approaching weightlessness.

7. A device according to claim 6, characterised in that a timing element (6) is connected in series with the movement status sensor (22) and that the occupant protection device is triggered by the evaluation circuit (OR) if the vehicle is in the state approaching weightlessness for longer than the switching time (t).

8. A device according to either claim 6 or 7, characterised in that the movement status sensor is a distance sensor which determines the distance of the motor vehicle from the road surface.

9. A device according to either claim 6 or 7, characterised in that the movement status sensor (22) responds to vertical acceleration.

10. A device according to either claim 6 or 7, characterised in that the movement status sensor is a wheel rebound sensor.

11. A device according to any one of claims 6 to 10, characterised by a compact unit in which the acceleration sensor and movement status sensor are arranged.

## Revendications

1. Procédé pour la détection du dépassement d'une valeur d'accélération prédéfinie, procédé dans lequel la valeur d'accélération prédéfinie est détectée au moyen d'un liquide déplacé dans un niveau tubulaire rectiligne fermé et dont la direction longitudinale est inclinée par rapport à l'accélération à surveiller, et au moyen d'un fluide indicateur disposé dans le liquide, et dont la densité est plus faible que celle du liquide et le volume plus réduit que celui du liquide, ainsi qu'au moyen d'un détecteur, qui est réalisé sous la forme d'une ligne émetteur/récepteur, pour des ondes optiques, électromagnétiques ou acoustiques, procédé caractérisé en ce que, à la valeur d'accélération prédéfinie est associé un angle de la direction longitudinale du niveau tubulaire par rapport à la direction de l'accélération à surveiller et à la direction de la gravitation.

2. Véhicule avec un détecteur pour la mise en oeuvre du procédé selon la revendication 1, avec un niveau tubulaire rectiligne, fermé, et incliné dans sa direction longitudinale par rapport à l'accélération à surveiller, niveau dans lequel sont contenus un liquide et un fluide indicateur de densité plus faible et de plus faible volume, et avec un détecteur, qui revêt la forme de lignes émetteur/récepteur pour des ondes optiques, électromagnétiques ou acoustiques, qui pénètrent à travers le liquide dans le niveau tubulaire, et ce détecteur détecte en fonction de la position du fluide indicateur si la valeur d'accélération prédéfinie est atteinte, l'axe longitudinal du niveau tubulaire étant disposé selon un angle tel par rapport à la direction de l'accélération à surveiller et par rapport à la gravitation que le fluide indicateur prend, lorsque la valeur d'accélération prédéfinie est atteinte, une position entre la ligne émetteur/récepteur.

3. Dispositif selon la revendication 2, caractérisé en ce que plusieurs détecteurs de ce type sont utilisés pour déterminer des accélérations orientées de façon différente.

4. Dispositif selon la revendication 3, caractérisé en ce que les niveaux tubulaires (1') des différents détecteurs sont orientés sur un sommet commun (S).

5. Dispositif selon la revendication 4, caractérisé en ce que les ligne émetteur/récepteur (5, 6) des détecteurs se terminent sur un récepteur commun (14).

6. Dispositif selon une des revendications 2 à 5, caractérisé en ce qu'il est prévu un détecteur supplémentaire d'état de déplacement (22) avec un circuit d'exploitation (OU) branché à la suite, qui indépendamment du détecteur d'accélération déclenche un dispositif de protection des passagers, lorsque le véhicule se trouve dans un état approchant de l'apesanteur.

7. Dispositif selon la revendication 6, caractérisé en ce qu'un organe de temporisation (6) est branché à la suite du détecteur d'état de déplacement (22) et en ce que le dispositif de protection des passagers est déclenché par le circuit d'exploitation (OU), lorsque le véhicule se trouve au-delà du temps de commutation (7) dans l'état approchant de l'apesanteur.

8. Dispositif selon la revendication 6 ou la revendication 7, caractérisé en ce que le détecteur d'état de déplacement est un dispositif de mesure de la distance déterminant la distance entre le véhicule automobile et la surface de la chaussée.

9. Dispositif selon la revendication 6 ou bien la revendication 7, caractérisé en ce que le détecteur d'état de déplacement (22) réagit à l'accélération verticale.

10. Dispositif selon la revendication 6 ou la revendication 7, caractérisé en ce que le détecteur d'état de déplacement est un détecteur de débattement des roues.

11. Dispositif selon une des revendication 6 à 10, caractérisé par une unité de construction compacte dans laquelle sont disposés le détecteur d'accélération et le détecteur de l'état de déplacement.
